# FASCICULE DE BREVET EUROPEEN

(11) **EP 4 605 305 B1**
(45) Date de publication et mention de la délivrance du brevet: **15.04.2026**
(21) Numéro de dépôt: 23793370.0
(22) Date de dépôt: 20.10.2023
(51) Int. Cl.: B64G 1/24, B64G 1/52, B64G 1/62

(54) **PROCÉDÉ DE DÉSORBITATION ET DÉSINTÉGRATION SÉCURISÉES D'UN SATELLITE**
VERFAHREN ZUM SICHEREN DEORBITING UND ZUR DESINTEGRATION EINES SATELLITEN
METHOD FOR SECURELY DEORBITING AND DISINTEGRATING A SATELLITE

(30) Priorité: 21.10.2022 FR 2210899
(43) Date de publication de la demande: 27.08.2025
(73) Titulaire: Bongiovanni, Francesco, 98000 MONACO (MC)
(72) Inventeur: Bongiovanni, Francesco, 98000 MONACO (MC)
(74) Mandataire: Hautier IP - MC/EP
(86) Numéro de dépôt international: PCT/EP2023/079249
(87) Numéro de publication internationale: WO 2024/084029

(56) Documents cités:
- JP-A- 2021 049 907
- US-A1- 2021 253 278
- US-B2- 9 809 327
- HAKIMA HOUMAN ET AL: "Low-Thrust Trajectory Design for Controlled Deorbiting and Reentry of Space Debris", 2021 IEEE AEROSPACE CONFERENCE (50100), IEEE, 6 March 2021 (2021-03-06), pages 1 - 10, XP033923330, DOI: 10.1109/AERO50100.2021.9438278
- JANOVSKY R ET AL: "End-Of-Life De-Orbiting Strategies for Satellites", 23 September 2002 (2002-09-23), pages 1 - 10, XP002669967, Retrieved from the Internet <URL:http://www.dlr.de/Portaldata/55/Resources/dokumente/sart/dglr-2002-028.pdf> [retrieved on 20120220]

## Description

### DOMAINE TECHNIQUE DE L'INVENTION

La présente invention concerne le domaine du spatial et particulièrement la durabilité de l'écosystème spatial. Elle trouve comme application avantageuse la minimisation de la génération et de l'accumulation de nouveaux débris spatiaux par le biais de la désorbitation précoce de satellites en orbite autour de la Terre à la fin de leur vie utile, tout particulièrement en vue de leur destruction lors de leur rentrée dans l'atmosphère terrestre. L'invention ne concerne pas la récupération et destruction de débris existants, elle concerne la prévention de génération de nouveaux débris spatiaux.

### ETAT DE LA TECHNIQUE

Le nombre de débris spatiaux en orbite autour de la Terre est en constante augmentation du fait de l'intensification de l'activité spatiale dans la plupart des pays. Les débris spatiaux comprennent en particulier les étages supérieurs des lanceurs spatiaux, les débris résultant d'explosions accidentelles d'engins spatiaux ou de collisions entre engins spatiaux ou entre débris, ainsi que les satellites artificiels hors-service ou bien ayant achevé leur mission (fin de vie utile). Avec l'accélération des activités spatiales dans le monde, le problème des débris se fait de plus en plus pressant au vu du danger de collision qu'ils posent. La taille des débris varie de gros engins spatiaux défunts jusqu'à des petits débris (résultants de collisions pour la plupart) de quelques centimètres de taille. Tous représentent un danger pour les activités spatiales car les grandes vitesses auxquelles ils orbitent naturellement en font de puissants projectiles même s'ils sont de très petite taille. En 2022, on recense notamment 5000 satellites inactifs en orbite basse. Si l'orbite de ces débris s'abaisse naturellement au fil du temps jusqu'à entrer dans l'atmosphère terrestre sous l'effet de la gravité, s'échauffer par friction avec l'atmosphère et finalement se disloquer, ce phénomène naturel d'élimination des débris spatiaux prend des années, voire des dizaines d'années, et ne suffit plus à compenser leur génération due à l'activité humaine.

Ce constat est alarmant : l'accumulation de débris en orbite constitue la plus grande source de pollution spatiale et représente un danger important pour les satellites opérationnels en orbite autour de la Terre ainsi que les vaisseaux spatiaux et les lanceurs. La plus grande crainte des experts concerne une potentielle collision entre un débris spatial et une mission avec équipage : un impact pourrait par exemple conduire à une dépressurisation de l'habitacle, et donc la perte de l'équipage, ou encore à la mise hors service de leur engin spatial. Par ailleurs, une collision, même entre débris, peut entrainer une chaîne de collisions et la génération d'un grand nombre de débris additionnels. Des mesures sont prises à l'échelle internationale afin de limiter cette pollution spatiale. Notamment, une directive des Nations Unies s'appliquant aux satellites en orbite basse (moins de 2000 kilomètres d'altitude) nouvellement envoyés dans l'espace exige que ces derniers rentrent dans l'atmosphère dans les 25 ans suivant leur fin de vie opérationnelle. Au vu de l'accroissement rapide des activités spatiales de par le monde, les pressions afin - entre autres - de raccourcir ce délai de 25 ans ne feront que croitre. Les acteurs de l'industrie spatiale devront donc très prochainement prévoir des moyens de faire désorbiter leurs satellites pour destruction atmosphérique le plus rapidement possible une fois qu'ils n'ont plus d'utilité.

La désorbitation des satellites en vue de leur destruction n'est cependant pas une opération aisée dans un espace extra-atmosphérique où circulent de plus en plus de débris spatiaux. Il existe en effet un risque important de voir un satellite entrer en collision avec l'un de ces débris lors de son trajet depuis son orbite jusqu'à l'atmosphère terrestre.

Les solutions techniques existantes pour la destruction des satellites en orbite ne sont pas optimales. La très grande majorité des satellites existants ne sont pas équipés de systèmes de désorbitation et leur désorbitation repose sur l'abaissement naturel de leur orbite. Certains systèmes passifs de désorbitation accélérée - comme par exemples les aérofreins déployables et autres systèmes de ralentissement - ont été étudiés mais ils sont difficiles ou coûteux à mettre en œuvre et ne réduisent pas de manière satisfaisante le temps de la désorbitation naturelle. Certaines solutions techniques prévoient notamment de commander la désorbitation depuis une base située sur Terre. Cependant, en cas de rupture de communication entre la base et le satellite, la désorbitation commandée à distance n'est plus possible.

Des systèmes de gestion de la course de satellites sont décrits dans les documents suivants : , US 2021/253278 A1, JP 2021 049907 A, Hakima Houman et al., « Low-thrust trajectory design for controlled deorbiting and reentry of space debris », 2021 IEEE Aeorospace Conference et Janovsky et al., « End-of-life de-orbiting strategies for Satellites ». US 9 809 327 B2 décrit un dispositif destiné à être couplé à un satellite avant le lancement pour le désorbitage du satellite, comprenant des moyens de commande; des moyens de propulsion reliés de manière fonctionnelle auxdits moyens de commande; des moyens de réception de signaux de commande; une source d'alimentation électrique; ledit dispositif étant tel que les moyens de propulsion sont activés par les moyens de commande lors de la réception des signaux de commande afin d'effectuer le désorbitage du satellite.

Un objet de la présente invention est donc de proposer un procédé de destruction plus sécurisé que les procédés existants.

### RESUME

Pour atteindre l'objectif, selon un mode de réalisation on prévoit un procédé de destruction d'un satellite comprenant :
- une étape d'initialisation sur Terre ou dans l'espace atmosphérique d'une mémoire embarquée dans le satellite comprenant la sauvegarde dans la mémoire embarquée d'informations initiales relatives à :
   ∘au moins un critère de fin de mission initial, et au moins l'un parmi :
      ∘au moins une position initiale d'au moins un corps secondaire,
      ∘au moins une trajectoire initiale de l'au moins un corps secondaire,
- N cycles d'actualisation de la mémoire embarquée, de préférence lorsque le satellite se trouve dans l'espace extra-atmosphérique, chaque cycle d'actualisation comprenant les sous-étapes suivantes :
   ola réception, par un dispositif de communication embarqué dans le satellite d'informations relatives à au moins l'un parmi :
      - au moins un critère de fin de mission n°i,
      - au moins une donnée dite donnée de corps secondaire, l'au moins une donnée de corps secondaire étant prise parmi :
         ▪ au moins une position n°i de l'au moins un corps secondaire,
         ▪ au moins une trajectoire n°i de l'au moins un corps secondaire,
            avec N et i étant des nombres entiers, N≥1 et 1≤i≤N,
   ola sauvegarde desdites informations dans la mémoire embarquée,
- une phase de désorbitation comprenant une activation d'un propulseur embarqué sur le satellite pour déplacer le satellite depuis l'espace extra-atmosphérique jusque dans l'espace atmosphérique, la phase de désorbitation étant déclenchée à un instant de désorbitation déterminé par un système de calcul embarqué dans le satellite, l'instant de désorbitation étant fonction de l'au moins une donnée de corps secondaire disponible au cycle d'actualisation n°N et de l'instant de survenue d'au moins un parmi les événements suivants :
   ∘la réception par le dispositif de communication d'une instruction de désorbitation,
   ∘la détection par des moyens de sécurité embarqués dans le satellite d'un dysfonctionnement satellite,
   ∘l'observation d'un critère de fin de mission.

L'étape d'initialisation des informations permet de garantir que, même en cas de rupture de communication avec la base distante avant qu'un cycle d'actualisation ait pu avoir lieu, le système de calcul embarqué ait à disposition des informations permettant une désorbitation la plus sécurisée possible.

La mise en oeuvre de cycles d'actualisation périodiques des données servant à la détermination de l'instant d'activation du système actif de désorbitation permet de s'assurer que ces dernières seront suffisamment récentes pour éviter toute collision ou du moins permet de réduire considérablement le risque collision avec un débris spatial ou un satellite secondaire lors de la descente du satellite vers l'atmosphère terrestre.

La sauvegarde de ces données dans une mémoire embarquée permet une autonomie du satellite en cas de rupture de communication avec la base distante.

Un deuxième objet de l'invention concerne un système de désorbitation d'un satellite comprenant :
- un dispositif de communication configuré pour recevoir, lorsque le satellite est sur Terre ou dans l'espace atmosphérique, des données relatives à :
   ∘au moins un critère de fin de mission initial,
   ∘au moins une position initiale d'au moins un corps secondaire,
   ∘au moins une trajectoire initiale de l'au moins un corps secondaire, le dispositif de communication étant configuré pour recevoir, lorsque le satellite est dans l'espace extra-atmosphérique, lors de N cycles d'actualisation, des données relatives à :
      oau moins un critère de fin de mission n°i,
      oau moins une donnée dite donnée de corps secondaire, l'au moins une donnée de corps secondaire étant prise parmi :
         - **au moins** une position n°i de l'au moins un corps secondaire,
         - au moins une trajectoire n°i de l'au moins un corps secondaire, avec N et i étant des nombres entiers, N≥1 et 1≤i≤N,
- un système de calcul, configuré pour déterminer un instant de désorbitation en fonction de l'au moins une donnée des corps secondaire et de l'instant de survenue d'au moins un parmi les événements suivants :
   ∘la réception par le dispositif de communication d'une instruction de désorbitation,
   ∘la détection par des moyens de sécurité embarqués dans le satellite d'un dysfonctionnement du satellite,
   ∘l'observation d'un critère de fin de mission.

Un troisième objet de l'invention concerne un satellite comprenant un système selon le deuxième objet de l'invention et comprenant en outre un propulseur, le satellite étant configuré pour activer le propulseur en fonction de l'instant de désorbitation le plus proche dans le temps calculé par le système de calcul.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 illustre un satellite en orbite autour de la Terre, en communication avec une base terrestre distante, ainsi que des corps secondaires.
La figure 2 est un schéma bloc illustrant le déroulement des différentes étapes du procédé selon l'invention.
La figure 3 est un schéma bloc représentant la base distante et les principaux éléments du satellite et leurs interactions entre eux.
La figure 4 est un schéma illustrant un exemple de déroulé du processus de désorbitation selon l'invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions et distances entre les différents objets représentés ainsi que leurs tailles et nombres ne sont pas représentatifs de la réalité.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Avantageusement, l'instant de désorbitation est fonction :
- d'une part: de l'au moins une position initiale de l'au moins un corps secondaire et/ou de l'au moins une trajectoire initiale de l'au moins un corps secondaire et/ou de l'au moins une donnée de corps secondaire disponible au cycle d'actualisation n°N,
- et d'autre part de l'instant de survenue d'au moins un parmi les événements suivants :
   ∘la réception par le dispositif de communication d'une instruction de désorbitation,
   ∘la détection par des moyens de sécurité embarqués dans le satellite d'un dysfonctionnement satellite,
   ∘l'observation d'un critère de fin de mission.

Selon un mode de réalisation, le critère de fin de mission est une durée de mission et l'observation du critère de fin de mission correspond à l'expiration de la durée de mission ou dans lequel le critère de fin de mission correspond à au moins une action que le satellite doit accomplir et l'observation du critère de fin de mission correspond à l'accomplissement de cette au moins une action par le satellite.

Selon un mode de réalisation, le dysfonctionnement correspond à l'un parmi une avarie du satellite, une rupture de communication entre le satellite et une base distante, une avarie d'une charge utile du satellite.

Selon un exemple avantageux, durant la phase de désorbitation l'activation du propulseur déplace le satellite depuis l'espace extra-atmosphérique jusque dans l'espace atmosphérique. De préférence, le propulseur reste activé durant tout le déplacement du satellite depuis l'espace extra-atmosphérique jusque dans l'espace atmosphérique.

Avantageusement, le procédé comprend, après le calcul de l'instant de désorbitation, une sauvegarde de l'instant de désorbitation dans la mémoire embarquée.

Selon un exemple avantageux, le système de désorbitation comprend en outre une mémoire embarquée, la mémoire embarquée sauvegardant les données reçues par le dispositif de communication.

Avantageusement, le système de calcul incorpore de l'intelligence artificielle.

Selon un exemple avantageux, système de calcul, la mémoire embarquée et les moyens de sécurité sont composés de composants électroniques présentant un blindage électromagnétique.

Selon un exemple avantageux, le système de calcul, la mémoire embarquée et les moyens de sécurité sont protégés par un bouclier anti-radiations solaires.

Selon un exemple avantageux, le satellite est configuré de sorte que le propulseur puisse déplacer le satellite depuis l'espace extra-atmosphérique jusque dans l'espace atmosphérique.

Selon un exemple avantageux, le satellite comprend en outre un réservoir de carburant configuré pour alimenter en carburant le propulseur.

Selon un mode de réalisation, le satellite est configuré de sorte que le réservoir de carburant alimente le propulseur en carburant uniquement à partir de l'instant de désorbitation le plus proche dans le temps calculé par le système de calcul.

Dans la présente demande, la charge utile d'un engin spatial tel qu'un satellite désigne la ou les parties de cet engin destinée(s) à remplir les objectifs de sa mission. Par exemple, pour un satellite de télécommunications, il peut s'agir d'antennes ou de systèmes d'amplification. Pour un satellite ayant une mission de recherche, il peut par exemple s'agir d'instruments de mesure.

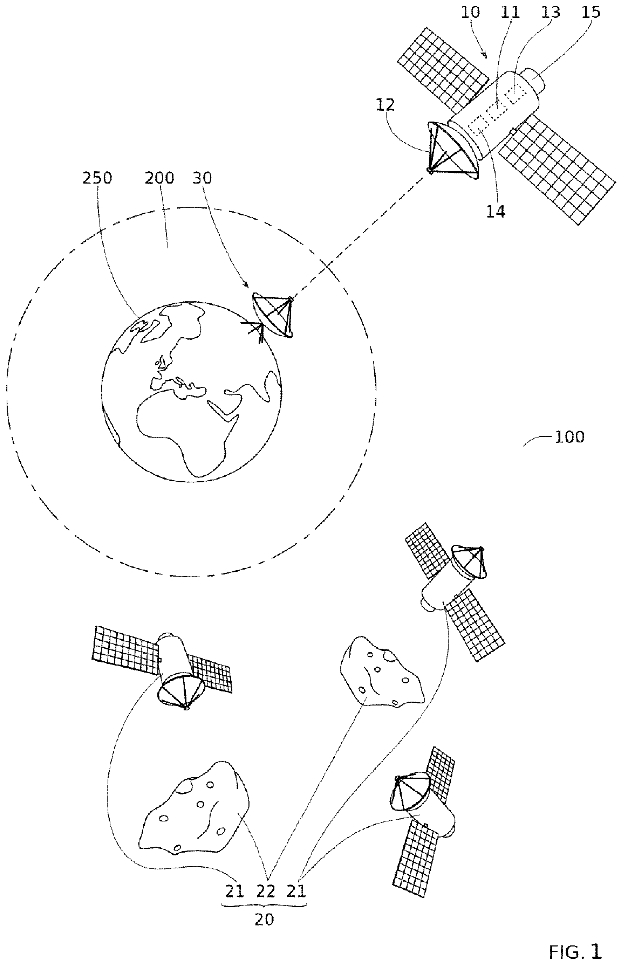

La figure 1 représente un satellite 10 se trouvant dans l'espace extra-atmosphérique 100, en orbite autour de la Terre 250. Dans l'espace extra-atmosphérique 100 circulent également des corps secondaires 20. Ces corps secondaires peuvent notamment être :
- des satellites secondaires 21 (y compris stations spatiales), en cours de mission ou arrivés en fin de vie (abandonnés ou hors service),
- des débris spatiaux provenant de l'activité humaine dans l'espace extra-atmosphérique, par exemple :
   ∘des débris volontairement largués dans le cadre de certaines missions spatiales, débris dits opérationnels (réservoirs largables, éléments permettant de larguer la charge utile des lanceurs spatiaux...),
   ∘des débris issus de la fragmentation d'engins spatiaux,
   ∘des débris issus de collisions entre engins spatiaux et/ou débris spatiaux,
   ∘les derniers étages de lanceurs placés en orbite autour de la Terre en même temps que leurs charges utiles,
- des corps naturels 22 tels que des astéroïdes ou des comètes.

Lors de la désorbitation du satellite 10, il est primordial d'éviter toute collision avec l'un de ces débris. Une telle collision aurait aussi pour effet de produire de nouveaux débris dont l'élimination se ferait alors seulement lors d'une rentrée atmosphérique due à l'attraction terrestre, des années voire des dizaines d'années plus tard. La désorbitation pourrait dans ce cas avoir des effets secondaires contreproductifs. Le procédé selon l'invention vise donc aussi à éviter un tel évènement.

Avantageusement, le satellite 10 comprend une mémoire embarquée 11. Cette mémoire 11 est apte à stocker des données concernant des informations qui permettront d'assurer une désorbitation plus sécurisée.

Le satellite 10 comporte également un dispositif de communication 12 lui permettant de communiquer avec un dispositif de communication d'une base distante 30. Le dispositif de communication 12 peuvent également être désignés dispositif de communication. Ils comprennent typiquement un récepteur pour capter des signaux envoyés par la base distante 30. De préférence, ils peuvent également comprendre un émetteur pour envoyer des signaux à destination de la base distante 30. Le dispositif de communication 12 comprennent avantageusement des ports de communication filaire ou à courte distance. Ces derniers peuvent notamment être utilisés lors de l'étape d'initialisation, avant le lancement du satellite 10. La base distante 30 peut être positionnée sur Terre 250, comme illustré en figure 1, mais elle peut également se trouver en orbite autour de la Terre 250. Il peut par exemple s'agir un satellite géostationnaire. Il est également envisageable que le satellite communique avec plusieurs bases distantes 30, ou encore qu'il communique avec une base distante 30 par l'intermédiaire de satellites relais.

Les échanges entre le dispositif de communication de la base distante 30 et le dispositif de communication 12 du satellite peuvent reposer sur différentes catégories de télécommunications telles que, mais non limitativement, les suivantes :
- Les ondes radioélectriques, tout particulièrement lorsque la base distante 30 se trouve sur Terre.
- Les télécommunications optiques spatiales, basées sur l'utilisation de lasers. Ce type de télécommunication peut aussi bien être employé lorsque la base distante se trouve sur Terre que lorsqu'il s'agit d'un satellite géostationnaire.

Le dispositif de communication 12 utilisés dans le cadre de la désorbitation du satellite peuvent être dédiés à la désorbitation ou avoir d'autres fonctions. Dans le cas où ils sont dédiés à la désorbitation, le dispositif de communications 12 sont avantageusement protégés des radiations solaires par un bouclier de protection.

Les informations émises depuis une base distante 30, reçues par le satellite 10 et stockées dans la mémoire embarquée 11 peuvent concerner :
- Un critère de fin de mission. Avantageusement, les informations enregistrées dans la mémoire embarquée 11 incluent même plusieurs critères de fin de mission. Typiquement, l'observation d'un seul d'entre eux provoque l'entrée dans la phase de désorbitation. On peut cependant prévoir que la condition d'enclenchement de la phase de désorbitation soit l'observation de plusieurs des critères de fin de mission. Le ou les critères de fin de mission sont par exemple :
   ∘une durée de mission,
   ∘l'achèvement d'un protocole de mission,
   ∘l'obtention d'une ou plusieurs données, par exemple une donnée de recherche dans le cadre d'un programme expérimental,
- La position d'un ou plusieurs corps secondaires 20. Le système de calcul 14 peut permettre, à partir d'informations successives sur la position d'un même corps, de déterminer la trajectoire de ce corps.
- La trajectoire d'un ou plusieurs corps secondaires 20. La base 30, qu'elle soit sur Terre ou en orbite autour de la Terre, peut communiquer avec des radars ou autres systèmes de repérage des corps secondaires 20. Elles ont ainsi accès à leurs positions et peuvent calculer leurs trajectoires, qui peuvent ensuite être envoyées au dispositif de communication 12 du satellite 10.

Le satellite 10 contient par ailleurs un système de calcul 14, pouvant également être désigné calculateur 14, permettant de déterminer l'instant optimal d'activation du système de désorbitation du satellite 10 en fonction d'informations stockées dans la mémoire embarquées 11. Le système de désorbitation du satellite 10 est également désigné par la suite système de désorbitation. Le système de calcul 14 comprend typiquement des processeurs et/ou microprocesseurs. De préférence, le système de calcul 14 incorpore de l'intelligence artificielle. Cela permet d'améliorer l'optimisation du moment d'activation du propulseur de désorbitation, afin de minimiser les risques de collisions avec d'autres corps.

Selon un autre mode de réalisation, un système de calcul 14 se trouve au niveau du satellite 10 et un autre système de calcul se trouve au niveau de la base distante 30, le système de calcul 14 du satellite 10 pouvant prendre le relais du système de calcul distant en cas de rupture de communication avec la base distante 30.

Lorsque arrive l'instant d'activation du système de désorbitation, le satellite 10 enclenche la phase de désorbitation et active le système de désorbitation. Ce dernier comprend un propulseur 15 embarqué sur le satellite 10. Ce propulseur 15 est configuré pour modifier l'orbite en cours du satellite 10 et le diriger vers l'atmosphère terrestre dans lequel il pourra se désintégrer.

Par exemple, le satellite 10 embarque une horloge pour déclencher le système de désorbitation à l'instant d'activation déterminé.

Le satellite 10 embarque par ailleurs des moyens de sécurité et de diagnostic, dits moyens de sécurité 13 permettant de détecter tout dysfonctionnement nécessitant la désorbitation du satellite 10. Un tel dysfonctionnement peut être :
- une avarie du satellite irréparable (blocage des mécanismes de déploiement des panneaux solaires, problème au niveau du moteur d'apogée...) et qui signifie la fin de sa vie utile,
- une rupture de communication entre le satellite 10 et la base distante 30,
- une perte de contrôle du satellite 10,
- une avarie de la charge utile transportée par le satellite 10, signifiant la fin de la vie utile du satellite 10,
- une avarie irréparable et rendant la mission du satellite 10 impossible à mener à bien et signifiant sa fin de vie utile et donc justifiant sa désorbitation dans les plus brefs délais.

Ces moyens de sécurité 13 prennent la forme de capteurs pouvant par exemple être situés au niveau un dispositif de communication 12, du propulseur ou encore de tout mécanisme ou sous-système ou composant du satellite ayant un rôle crucial dans le bon fonctionnement du satellite et/ou de l'analyse périodique des données de ces capteurs afin de déterminer si un tel dysfonctionnement a lieu.

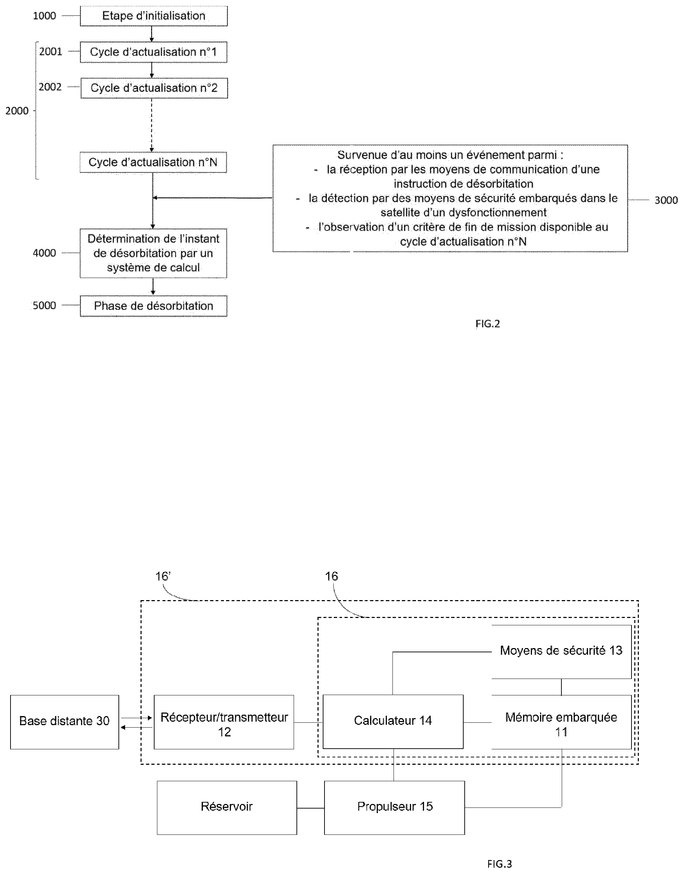

Les différentes étapes du procédé selon l'invention vont maintenant être décrites en référence à la figure 2.

### ETAPE D'INITIALISATION

Tout d'abord, lors d'une étape d'initialisation (bloc 1000 de la figure 2), des informations initiales sont enregistrées dans la mémoire embarquée 11. Ces informations initiales peuvent concerner les paramètres énumérés plus haut : critère de fin de mission initial, position initiale de corps secondaires 20, trajectoire initiale de corps secondaires 20...

L'enregistrement de ces informations initiales permet de palier un éventuel problème de communication entre le satellite 10 et ses sources d'informations (base(s) distante(s) 30) empêchant tout cycle d'actualisation de ces données. Il garantit un minimum d'autonomie et de sécurité lors de la désorbitation en cas d'une telle rupture de communication.

Par ailleurs, rapidement après son lancement, le satellite 10 passe typiquement par une étape de mise en service, souvent désignée par le terme anglais de « commissioning period ». La durée de cette période peut varier en fonction du satellite et d'autres paramètres. Cette phase ainsi que la phase de lancement du satellite sont des phases critiques au cours desquels il n'est pas rare que des équipements du satellite s'endommagent. Par ailleurs il peut arriver que durant cette période, suite à une avarie aucune communication entre le satellite 10 et la base distante 30 n'est plus possible. Si un problème technique survient dans cette période, il est donc avantageux que la mémoire embarquée 11 contienne des données préalablement enregistrées. Ainsi, même en l'absence de communication entre la base distante 30 et le satellite 10 lorsque ce dernier se trouve dans l'espace extra atmosphérique, par exemple du fait de l'endommagement du dispositif de communication, le satellite 10 sera en capacité de (a) décider de manière autonome si un évènement justifiant de déclencher la phase de désorbitation a eu lieu, puis (b) de déterminer l'instant optimal de déclenchement du propulseur 15 sur la base des informations qui lui auront été communiquées lors de la phase d'initialisation. Classiquement, l'espace atmosphérique désigne l'espace se trouvant à des altitudes comprises entre la surface de la Terre et la limite inférieure de l'espace extra-atmosphérique. Ainsi, ce mode de réalisation permet de s'assurer que le satellite 10 effectuera sa phase de désorbitation anticipée, préservant donc l'environnement extra-atmosphérique.

Il convient de noter que tant que les communications entre satellite 10 et bases 30 fonctionnent, un dispositif de coordination peut permette à tout moment à l'opérateur terrestre de passer outre la décision autonome de désorbitation anticipée du satellite 10.

Selon un mode de réalisation alternatif, il est cependant envisageable de ne pas mettre en œuvre l'étape d'initialisation et d'attendre que la satellite 10 soit en orbite ou tout au moins soit dans l'espace extra atmosphérique avant de commencer à lui transmettre et lui faire enregistrer des informations dans sa mémoire embarquée.

### ACTUALISATION

Une fois le satellite 10 dans l'espace extra-atmosphérique, on prévoit au moins un cycle d'actualisation (blocs 2001, 2002...). De préférence, plusieurs cycles d'actualisation ont lieu. Ils peuvent par exemple être indexés selon une numérotation allant de 1 à N.

Lors d'un cycle d'actualisation, la base distante 30 envoie au satellite 10, par l'intermédiaire de leurs dispositifs de communication respectifs, des informations sur les paramètres énumérés plus haut : critère de fin de mission, position de corps secondaires 20, trajectoire de corps secondaires 20...

L'actualisation d'un paramètre signifie qu'une nouvelle valeur de ce paramètre est enregistrée dans la mémoire embarquée 11 du satellite 10. Avantageusement, les anciennes valeurs du paramètre sont conservées dans la mémoire embarquée 11. Cela est notamment le cas lorsque le paramètre en question concerne la position d'un corps secondaire 20 : le système de calcul 14 peut, à partir de plusieurs données de position successives, déterminer la trajectoire du corps secondaire 20 en question.

Par « actualisation », on n'entend pas uniquement la mise à jour de paramètres enregistrés lors de l'étape d'initialisation. Il est en effet envisageable de commencer à enregistrer un paramètre d'une nouvelle nature lors d'un cycle d'actualisation. Le satellite 10 peut par exemple quitter la Terre 250 en ayant uniquement une information la position d'autres corps 20, et commencer à recevoir des informations sur leur trajectoire lorsqu'il est en orbite.

Par ailleurs, tous les paramètres ne sont pas forcément actualisés lors d'un cycle d'actualisation. Il est par exemple possible à un cycle d'actualisation n°i d'actualiser les informations relatives à la position ou la trajectoire de corps secondaires 20 mais, toujours lors de ce cycle n°i, de pas actualiser ou varier le critère de fin de mission. Le calcul de l'instant de déclenchement du système de désorbitation se fait avec les données disponibles au moment du calcul : il peut s'agir de données enregistrées à des cycles d'actualisation distincts, voire lors de l'étape d'initialisation. De même il est par exemple possible à un cycle d'actualisation n°N d'actualiser ou de faire varier le critère de fin de mission mais de ne pas recevoir de données de corps secondaires, typiquement relatives à la position ou à la trajectoire de corps secondaires 20. Le calcul de l'instant de déclenchement du système de désorbitation se fait alors en prenant en compte les données de corps secondaires 20 reçues lors d'un cycle antérieur au cycle n°N. Si aucune donnée relative aux corps secondaires 20 n'a été reçue au cours des N cycles d'actualisation, alors le calcul de l'instant de déclenchement prend en compte la position initiale et/ou la trajectoire initiale du corps secondaires telles que sauvegardées à l'étape d'initialisation.

Par ailleurs, le calcul de l'instant de déclenchement du système de désorbitation peut se faire en prenant en compte les données de corps secondaires 20 reçues lors du cycle N ou d'un cycle antérieur au cycle n°N, ainsi que la position initiale et/ou la trajectoire initiale du ou des corps secondaires telles que sauvegardées à l'étape d'initialisation.

L'actualisation des informations peut être périodique. On peut prévoir que la fréquence d'actualisation des informations augmente dans les jours ou heures précédant la fin programmée de la mission. Une désorbitation suite à l'expiration d'une durée de mission est en effet un évènement pouvant être anticipé. L'augmentation du nombre de cycles d'actualisation avant la désorbitation permet d'optimiser l'instant de désorbitation et donc d'améliorer encore la sécurité de la procédure.

### SURVENUE D'UN EVENEMENT AYANT POUR CONSEQUENCE L'ENCLENCHEMENT DE LA PHASE DE DESORBITATION

Plusieurs évènements peuvent être à l'origine de l'enclenchement de la phase de désorbitation. Parmi ces événements, on compte notamment :
- La réception par le dispositif de communication d'une instruction de désorbitation. Cette instruction provient de la base distante 30, sur Terre ou dans l'espace, ou bien d'un autre engin autorisé à envoyer de telles instructions au satellite 10. Ce cas de figure peut notamment se produire lorsqu'un opérateur humain estime que le satellite n'a plus de raison d'être, quand bien même la durée de mission ne serait pas écoulée.
- La détection par les moyens de sécurité 13 d'au moins un dysfonctionnement tel que décrit plus haut.
- L'observation d'un ou plusieurs critères de fin de mission, pouvant être par exemple :
   ∘l'expiration de la durée de mission,
   ∘la réception par le système central d'une information relative à l'achèvement du protocole de mission,
   ∘l'enregistrement dans la mémoire embarquée 11 de la donnée recherchée.

L'évènement à l'origine de la désorbitation peut donc soit survenir au niveau du satellite, soit au niveau de la base distante 30 ou d'un autre engin spatial. L'activation de la désorbitation est donc soit autonome, soit contrôlée à distance.

Une fois un évènement justifiant (selon des critères pré-établis) la désorbitation destructive du satellite ayant survenu, l'objectif est de le faire désorbiter dans les plus brefs délais. En l'absence d'autres corps 20, l'activation du propulseur de désorbitation pourrait se faire immédiatement (de manière autonome ou bien guidée), mais si d'autres corps 20 font encourir un danger de collision, il convient de décider d'un moment optimal d'activation du propulseur 15.

### DETERMINATION DE L'INSTANT DE DESORBITATION

Le système de calcul 14 détermine un instant de désorbitation optimal, permettant une désorbitation minimisant les risques de collision avec un débris spatial durant la descente jusqu'à l'atmosphère terrestre. Cet instant est fonction des données des corps secondaires 20 disponibles, c'est-à-dire de leur position et/ou de données relatives à leur trajectoire.

Cette détermination peut avoir lieu suite à la survenue d'un des évènements ayant pour conséquence l'enclenchement de la phase de désorbitation (cas visé à la figure 2). Elle peut également avoir lieu de façon régulière, par exemple à la suite de chaque cycle d'actualisation des informations. La sauvegarde de nouvelles données sur la position et/ou la trajectoire des corps secondaires 20 peut en effet permettre de déterminer un instant de désorbitation plus adéquat. Ainsi, à chaque cycle d'actualisation, un nouvel instant de désorbitation peut être enregistré dans la mémoire embarquée 11. Le fait qu'un instant de désorbitation soit toujours disponible dans la mémoire embarquée 11 permet d'assurer la désorbitation même en cas de défaillance du système de calcul 14 au cours de la mission du satellite 10. On prévoit en ce sens que la mémoire embarquée puisse activer directement le propulseur 15, notamment sans passer par le système de calcul.

Il est possible que, à la place ou en complément d'un instant de désorbitation, il soit enregistré dans la mémoire embarquée 11 du satellite 10 une information qui pourra ensuite permettre de déterminer l'instant de désorbitation. Par exemple, il peut être enregistré une information sur le risque de collision en cas de désorbitation (ou, plus directement, si une désorbitation sans collision est possible) à un instant donné, ou plusieurs instants donnés. Typiquement le résultat du système de calcul 14 peut être un accord (OK) ou un refus (KO) d'enclencher la phase de désorbitation à un instant optimal. Ce résultat est fonction des données des corps secondaires 20 disponibles. Cela peut notamment être le cas lorsqu'aucune information sur l'instant de survenue d'un événement enclenchant la phase de désorbitation 5000 n'est disponible. L'instant de désorbitation sera alors déterminé lorsque cet évènement a lieu, ou bien lorsque qu'une donnée relative à l'instant de survenue de cet événement est enregistrée dans la mémoire embarquée 11. Typiquement, cette donnée est la durée de mission du satellite 10. Il est également possible que l'instant de désorbitation soit communiqué au satellite 10 depuis la base distante 30.

Selon un mode de réalisation, le système de désorbitation 16 est configuré de sorte que, tant que la communication est possible entre le satellite 10 et la base distante 30, les décisions d'un opérateur humain priment systématiquement sur le système autonome. Ainsi, il peut être défini que tant que la communication est possible, la phase de désorbitation ne peut être déclenchée que si une instruction de désorbitation est reçue par le dispositif de communication 12. Si en revanche la communication est interrompue, alors le système autonome prend le relai sur l'opérateur humain.

Le système de calcul 14 peut trouver plusieurs instants optimaux de désorbitation permettant une désorbitation sécurisée. Dans ce cas, le système de désorbitation 16 est avantageusement programmé pour sélectionner l'instant le plus proche dans le temps pour effectuer la désorbitation. Cela permet de minimiser encore le temps passé par le satellite 10 dans l'espace extra-atmosphérique en tant que débris spatial.

Il est à noter que la désorbitation peut être effectuée sans passer par la détermination d'un instant optimal de désorbitation. Ce mode de désorbitation est désigné « désorbitation simple », par opposition à une « désorbitation optimisée ». Le satellite 10 peut être désorbité de cette manière notamment en cas de dysfonctionnement du système de calcul 14 et/ou de la mémoire embarquée 11 et/ou un dispositif de communication.

### PHASE DE DESORBITATION

La phase de désorbitation (bloc 5000) en elle-même est engagée à l'instant de désorbitation. Elle comprend l'activation du système de désorbitation. Ce système comprend un propulseur 15 embarqué sur le satellite 10. Ce propulseur est configuré pour extraire le satellite 10 de son orbite et de le diriger vers l'atmosphère terrestre. Le propulseur 15 est de préférence distinct des autres moteurs ou propulseurs du satellite et est dédié uniquement à la désorbitation du satellite 10. Il est de préférence associé à un réservoir de carburant lui aussi dédié à la désorbitation. Ainsi, le satellite 10 peut comprendre un réservoir alimentant uniquement le propulseur 15 de désorbitation. Il peut également être associé à une source de poussée (électrique, ionique ou autre) dédiée à la désorbitation, dont l'autonomie et la poussée sont optimisées au préalable pour permettre une désorbitation du satellite 10 jusqu'à l'entrée dans l'atmosphère terrestre.

Cela signifie que le satellite est préférablement muni à l'origine d'un moteur (par exemple un moteur à combustion, un moteur ionique ou un moteur électrique) dédié à la désorbitation et dont la puissance et la durée d'activation sont calibrées pour alimenter le propulseur lors de la phase de désorbitation. Cela permet, en cas de consommation de l'intégralité des autres réservoirs de carburant d'autres moteurs du satellite, notamment les moteurs dédiés à sa mission principale, de pouvoir assurer la désorbitation de ce dernier.

Selon un autre mode de réalisation, il est cependant possible que le propulseur 15 ait d'autres fonctions que la désorbitation du satellite 10 en vue de sa destruction. Par exemple, ce propulseur 15 peut avoir pour fonction de placer le satellite 10 sur une autre orbite qui n'est pas une orbite de désorbitation. Le propulseur 15 peut également être le propulseur principal du satellite pour la réalisation de sa mission. Il est par exemple possible de faire faire une rotation sur lui-même au satellite 10, typiquement une volte-face, et utiliser son moteur de poussée de mission pour lui appliquer une poussée dans une direction permettant de le freiner et/ou dévier sa trajectoire, et ainsi faire baisser son altitude. Dans ce cas, on peut prévoir que le satellite 10 comprenne un réservoir configuré pour alimenter le propulseur 15 uniquement durant la phase de désorbitation ainsi qu'un ou plusieurs réservoirs configurés pour alimenter le propulseur 15 durant des phases autres que la phase de désorbitation. Alternativement, on peut prévoir que le satellite 10 comprenne un réservoir configuré pour alimenter le propulseur 15 durant la phase de désorbitation et durant des phases autres que la phase de désorbitation.

Le positionnement du propulseur (ou de sa poussée) doit diriger le satellite vers l'atmosphère terrestre durant la phase de désorbitation. Ceci peut être fait par exemple en manœuvrant le satellite pour le placer dans la bonne direction avant la désorbitation, ou bien en intégrant dans le satellite 10 un propulseur dédié à la désorbitation positionné de manière à le pousser dans la bonne direction. Un dispositif de sécurité peut s'assurer que le système de désorbitation 16 ne s'active pas si le propulseur est dans une position telle qu'il pousserait le satellite dans une autre direction que celle requise pour la désorbitation.

Les caractéristiques de la poussée appliquée au satellite 10 par le propulseur 15 sont typiquement fonction des caractéristiques physiques du satellite (poids, aérodynamisme...) et de son orbite (position et trajectoire).

Les modes de réalisation décrits plus haut prévoient que le déplacement du satellite 10 de son orbite à l'atmosphère terrestre 200 lors de sa désorbitation soit assurée par un propulseur actif. Cependant, il est également possible que ce déplacement soit assuré par un système passif tel que des aérofreins.

Le satellite 10 est désintégré lors de sa rentrée atmosphérique par la combinaison d'effets thermiques et mécaniques.

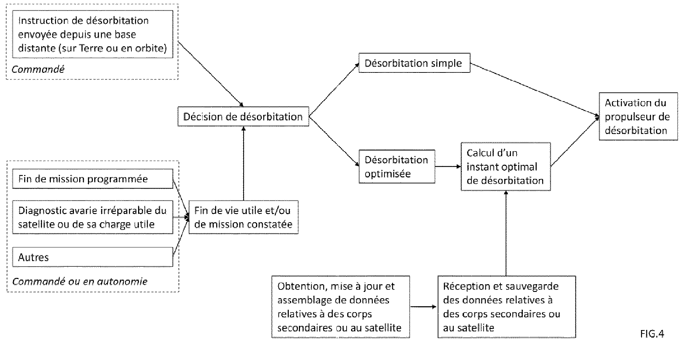

La figure 4 est un exemple d'ordinogramme des différentes étapes du procédé de désorbitation du satellite. Cette figure n'écarte pas que le procédé se déroule selon d'autres modes de réalisation que ceux illustrés.

L'ensemble formé de la mémoire embarquée 11, du système de calcul 14 et des moyens de sécurité 13 fait typiquement partie d'un système de désorbitation 16. Selon un mode de réalisation, le système de désorbitation 16' comprend également les moyens de communication 12. Il peut également comprendre le propulseur 15. Avantageusement, ce système 16, 16' est configuré pour pouvoir fonctionner malgré une rupture irrémédiable de communication avec la base distante 30 ou une avarie fatale du satellite. Cela lui confère une autonomie permettant d'assurer une désorbitation du satellite même lorsque la communication avec la base 30 est interrompue.

Le système de désorbitation 16, 16' est de préférence entouré d'un bouclier de protection contre les rayonnements solaires. Ses sous-systèmes et composants peuvent être fabriqués et configurés afin d'y résister. Le bouclier peut par exemple être à base d'un verre composite comprenant de l'oxyde de cérium (CeO₂) ou encore être formé de couches de polyéthylène imprégnées d'hydrogène.

Avantageusement, les composants électroniques compris dans le système de désorbitation 16, 16' sont par ailleurs dotés d'un blindage électromagnétique permettant de réduire le champ électromagnétique à leur voisinage. Ce blindage peut être composé de feuilles, grilles, écrans et/ou mousses métalliques, de gaz ionisés et/ou de plasmas.

Le système de désorbitation 16, 16' peut également comprendre un ou plusieurs systèmes logiciels de résilience et de redondance.

Ces différentes mesures de protection, mises en œuvre individuellement ou en combinaison, permettent notamment de protéger le système 16, 16' des radiations et tout particulièrement des radiations solaires. Si, à cause de ces radiations (ou pour d'autres causes), le dispositif de communication 12 avec la base distante 30 deviennent hors service, les composants nécessaires à la désorbitation (mémoire embarquée 11, moyens de sécurité 13 et système de calcul 14) soient eux préservés. Le système de désorbitation 16 peut ainsi continuer de fonctionner de façon autonome et assurer la désorbitation du satellite, quand bien même le satellite ne répondrait plus et serait inactif à cause de radiations ou autres.

A travers les différents modes de réalisation décrits ci-dessus, il apparaît clairement que l'invention propose une solution de désorbitation sécurisée des satellites en orbite. Cette solution permet en outre une désorbitation et donc une destruction plus rapide que les solutions existantes.

La solution proposée permet ainsi la prévention ou du moins la minimisation de la génération de nouveaux débris spatiaux.

Les avantages procurés par cette solution sont d'autant plus importants que le nombre de nouveaux satellites mis en orbite dans les années à venir va croître très rapidement, non seulement dans le cadre de nouvelles missions et projets, mais également comme conséquence de la nécessité de remplacer périodiquement toutes les flottes de satellites. Il est donc manifeste qu'équiper les satellites nouvellement lancés d'un système de désorbitation selon la présente invention, et/ou de mettre en œuvre sur les satellites nouvellement lancés le procédé de désorbitation selon la présente invention, permettra de réduire significativement la génération de débris spatiaux et donc contribuer à la durabilité de l'environnement spatial.

L'invention n'est pas limitée aux modes de réalisations précédemment décrits et s'étend à tous les modes de réalisation couverts par l'invention.

## Revendications

1. Procédé de destruction d'un satellite (10) comprenant :
- une étape d'initialisation (1000) sur Terre (250) ou dans l'espace atmosphérique (200) d'une mémoire embarquée (11) dans le satellite (10) comprenant la sauvegarde dans la mémoire embarquée (11) d'informations initiales relatives à :
• au moins un critère de fin de mission initial, et au moins l'un parmi :
• au moins une position initiale d'au moins un corps secondaire (20),
• au moins une trajectoire initiale de l'au moins un corps secondaire (20),
- N cycles d'actualisation (2000) de la mémoire embarquée (11), de préférence lorsque le satellite (10) se trouve dans l'espace extra-atmosphérique (100), chaque cycle d'actualisation comprenant les sous-étapes suivantes :
• la réception, par un dispositif de communication (12) embarqué dans le satellite (10) d'informations relatives à au moins l'un parmi :
∘ au moins un critère de fin de mission n°i,
∘ au moins une donnée dite donnée de corps secondaire (20), l'au moins une donnée de corps secondaire (20) étant prise parmi :
▪ au moins une position n°i de l'au moins un corps secondaire (20),
▪ au moins une trajectoire n°i de l'au moins un corps secondaire (20), avec N et i étant des nombres entiers, N≥1 et 1≤i≤N,
• la sauvegarde desdites informations dans la mémoire embarquée (11),
- une phase de désorbitation (5000) comprenant une activation d'un propulseur (15) embarqué sur le satellite (10) pour déplacer le satellite (10) depuis l'espace extra-atmosphérique (100) jusque dans l'espace atmosphérique (200), la phase de désorbitation (5000) étant déclenchée à un instant de désorbitation déterminé par un système de calcul (14) embarqué dans le satellite (10), l'instant de désorbitation étant fonction :
• d'une part: de l'au moins une position initiale de l'au moins un corps secondaire (20) et/ou de l'au moins une trajectoire initiale de l'au moins un corps secondaire (20) et/ou de l'au moins une donnée de corps secondaire (20) disponible au cycle d'actualisation n°N,
• et d'autre part de l'instant de survenue d'au moins un parmi les événements suivants :
∘ la réception par le dispositif de communication (12) d'une instruction de désorbitation,
∘ la détection par des moyens de sécurité (13) embarqués dans le satellite (10) d'un dysfonctionnement satellite (10),
∘ l'observation d'un critère de fin de mission.

2. Procédé selon la revendication précédente dans lequel le critère de fin de mission est une durée de mission et l'observation du critère de fin de mission correspond à l'expiration de la durée de mission ou dans lequel le critère de fin de mission correspond à au moins une action que le satellite (10) doit accomplir et l'observation du critère de fin de mission correspond à l'accomplissement de cette au moins une action par le satellite (10).

3. Procédé selon l'une quelconque des revendications précédentes dans lequel le dysfonctionnement correspond à l'un parmi une avarie du satellite (10), une rupture de communication entre le satellite (10) et une base distante (30), une avarie d'une charge utile du satellite (10).

4. Procédé selon l'une quelconque des revendications précédentes dans lequel durant la phase de désorbitation (5000) l'activation du propulseur (15) déplace le satellite (10) depuis l'espace extra-atmosphérique (100) jusque dans l'espace atmosphérique (200).

5. Procédé selon l'une quelconque des revendications précédentes, comprenant, après le calcul de l'instant de désorbitation, une sauvegarde de l'instant de désorbitation dans la mémoire embarquée (11).

6. Système de désorbitation d'un satellite (10) comprenant :
- un dispositif de communication (12) configuré pour recevoir, lorsque le satellite (10) est sur Terre (250) ou dans l'espace atmosphérique (200), des données relatives à :
• au moins un critère de fin de mission initial,
• au moins une position initiale d'au moins un corps secondaire (20),
• au moins une trajectoire initiale de l'au moins un corps secondaire (20), le dispositif de communication (12) étant configuré pour recevoir, lorsque le satellite (10) est dans l'espace extra-atmosphérique (100), lors de N cycles d'actualisation (2000), des données relatives à :
• au moins un critère de fin de mission n°i,
• au moins une donnée dite donnée de corps secondaire (20), l'au moins une donnée de corps secondaire (20) étant prise parmi :
∘ au moins une position n°i de l'au moins un corps secondaire (20),
∘ au moins une trajectoire n°i de l'au moins un corps secondaire (20),
avec N et i étant des nombres entiers, N≥1 et 1≤i≤N,
- un système de calcul (14), configuré pour déterminer un instant de désorbitation en fonction de l'au moins une donnée des corps secondaire (20) et de l'instant de survenue d'au moins un parmi les événements suivants :
• la réception par le dispositif de communication (12) d'une instruction de désorbitation,
• la détection par des moyens de sécurité (13) embarqués dans le satellite (10) d'un dysfonctionnement du satellite (10),
• l'observation d'un critère de fin de mission.

7. Système selon la revendication précédente comprenant en outre une mémoire embarquée (11), la mémoire embarquée (11) sauvegardant les données reçues par le dispositif de communication (12).

8. Système selon l'une quelconque des revendications 6 et 7 dans lequel le système de calcul (14) incorpore de l'intelligence artificielle.

9. Système selon l'une quelconque des revendications 6 à 8 dans lequel le système de calcul (14), la mémoire embarquée (11) et les moyens de sécurité (13) sont composés de composants électroniques présentant un blindage électromagnétique.

10. Système selon l'une quelconque des revendications 6 à 9 dans lequel le système de calcul (14), la mémoire embarquée (11) et les moyens de sécurité (13) sont protégés par un bouclier anti-radiations solaires.

11. Satellite (10) comprenant un système selon l'une quelconque des revendications 6 à 10 et comprenant en outre un propulseur (15), le satellite (10) étant configuré pour activer le propulseur (15) en fonction de l'instant de désorbitation le plus proche dans le temps calculé par le système de calcul (14).

12. Satellite (10) selon la revendication précédente configuré de sorte que le propulseur (15) puisse déplacer le satellite (10) depuis l'espace extra-atmosphérique (100) jusque dans l'espace atmosphérique (200).

13. Satellite (10) selon l'une quelconque des deux revendications précédentes comprenant un réservoir de carburant configuré pour alimenter en carburant le propulseur (15).

14. Satellite (10) selon la revendication précédente configuré de sorte que le réservoir de carburant alimente le propulseur (15) en carburant uniquement à partir de l'instant de désorbitation le plus proche dans le temps calculé par le système de calcul (14).

## Patentansprüche

1. Verfahren zum Zerstören eines Satelliten (10), umfassend:
- einen Schritt des Initialisierens (1000) auf der Erde (250) oder in dem atmosphärischen Raum (200) eines in dem Satelliten (10) integrierten Speichers (11), der das Speichern von Ausgangsinformationen in dem integrierten Speicher (11) umfasst, die sich auf Folgendes beziehen:
• mindestens ein anfängliches Kriterium eines Missionsendes,
und mindestens eines von:
• mindestens eine Ausgangsposition von mindestens einem Sekundärkörper (20),
• mindestens eine Ausgangsbahn des mindestens einen Sekundärkörpers (20),
- N Aktualisierungszyklen (2000) des integrierten Speichers (11), vorzugsweise wenn sich der Satellit (10) in dem Weltraum (100) befindet, wobei jeder Aktualisierungszyklus die folgenden Unterschritte umfasst:
• Empfangen, durch eine in dem Satelliten (10) integrierte Kommunikationsvorrichtung (12), von Informationen, die sich auf mindestens eines von Folgendem beziehen:
∘ mindestens ein Kriterium eines Missionsendes n°i,
∘ mindestens eine Sekundärkörperangabe (20), wobei die mindestens eine Sekundärkörperangabe (20) von folgenden Daten stammt:
▪ mindestens einer Position n°i des mindestens einen Sekundärkörpers (20),
▪ mindestens einer Bahn n°i des mindestens einen Sekundärkörpers (20), wobei N und i ganze Zahlen sind, N≥1 und 1≤i≤N,
• Speichern der Informationen in dem integrierten Speicher (11),
- eine Desorbitierungsphase (5000), das eine Aktivierung eines auf dem Satelliten (10) montierten Triebwerks (15) umfasst, um den Satelliten (10) aus dem Weltraum (100) in den atmosphärischen Raum (200) zu bewegen, wobei die Desorbitierungsphase (5000) zu einem Desorbitierungszeitpunkt ausgelöst wird, der von einem in dem Satelliten (10) eingebetteten Berechnungssystem (14) bestimmt wird, wobei der Desorbitierungszeitpunkt abhängig ist von:
• einerseits: von der mindestens einen Ausgangsposition des mindestens einen Sekundärkörpers (20) und/oder von der mindestens einen Ausgangsbahn des mindestens einen Sekundärkörpers (20) und/oder von der mindestens einen dem Aktualisierungszyklus n°N zur Verfügung stehenden Sekundärkörperangabe (20),
• und andererseits zu dem Zeitpunkt des Eintretens mindestens eines der folgenden Ereignisse:
∘ Empfangen einer Desorbitierungsanweisung durch die Kommunikationsvorrichtung (12),
∘ Erkennen einer Funktionsstörung des Satelliten (10) durch in dem Satelliten (10) eingebettete Sicherheitseinrichtungen (13),
∘ Einhalten eines Kriteriums des Missionsendes.

2. Verfahren nach dem vorhergehenden Anspruch, wobei das Kriterium des Missionsendes eine Missionsdauer ist und die Einhaltung des Kriteriums des Missionsendes dem Ablauf der Missionsdauer entspricht oder wobei das Kriterium des Missionsendes mindestens einer Aktion entspricht, die der Satellit (10) durchführen muss, und die Einhaltung des Kriteriums des Missionsendes der Durchführung dieser mindestens einen Aktion durch den Satellit (10) entspricht.

3. Verfahren nach einem der vorhergehenden Ansprüche, wobei die Funktionsstörung eine von einer Beschädigung des Satelliten (10), einer Unterbrechung der Kommunikation zwischen dem Satelliten (10) und einer entfernten Basis (30) und einer Beschädigung einer Nutzlast des Satelliten (10) entspricht.

4. Verfahren nach einem der vorhergehenden Ansprüche, wobei während der Desorbitierungsphase (5000) die Aktivierung des Triebwerks (15) den Satelliten (10) aus dem Weltraum (100) in den atmosphärischen Raum (200) bewegt.

5. Verfahren nach einem der vorhergehenden Ansprüche, umfassend, nach dem Berechnen des Desorbitierungszeitpunkts, ein Speichern des Desorbitierungszeitpunkts in dem integrierten Speicher (11).

6. Desorbitierungssystem eines Satelliten (10), umfassend:
- eine Kommunikationsvorrichtung (12), die so eingerichtet ist, dass sie, wenn sich der Satellit (10) auf der Erde (250) oder in dem atmosphärischen Raum (200) befindet, Daten empfängt, die sich auf Folgendes beziehen:
• mindestens ein anfängliches Kriterium eines Missionsendes,
• mindestens eine Ausgangsposition von mindestens einem Sekundärkörper (20),
• mindestens eine Ausgangsbahn des mindestens einen Sekundärkörpers (20), wobei die Kommunikationsvorrichtung (12) so eingerichtet ist, dass sie, wenn sich der Satellit (10) in dem Weltraum (100) befindet, bei N Aktualisierungszyklen (2000) Daten empfängt, die sich auf Folgendes beziehen:
• mindestens ein Kriterium des Missionsendes n°i,
• mindestens eine Sekundärkörperangabe (20), wobei die mindestens eine Sekundärkörperangabe (20) von folgenden Daten stammt:
∘ mindestens einer Position n°i des mindestens einen Sekundärkörpers (20),
∘ mindestens einer Bahn n°i des mindestens einen Sekundärkörpers (20),
wobei N und i ganze Zahlen sind, N≥1 und 1≤i≤N,
- ein Berechnungssystem (14), das so eingerichtet ist, dass es einen Desorbitierungszeitpunkt in Abhängigkeit von der mindestens einen Angabe der Sekundärkörper (20) und dem Zeitpunkt des Eintretens mindestens eines der folgenden Ereignisse bestimmt:
• Empfangen einer Desorbitierungsanweisung durch die Kommunikationsvorrichtung (12),
• Erkennen einer Funktionsstörung des Satelliten (10) durch in dem Satelliten (10) eingebettete Sicherheitseinrichtungen (13),
• Einhalten eines Kriteriums des Missionsendes.

7. System nach dem vorhergehenden Anspruch, ferner umfassend einen integrierten Speicher (11), wobei der integrierte Speicher (11) die von der Kommunikationsvorrichtung (12) empfangenen Daten speichert.

8. System nach einem der Ansprüche 6 und 7, wobei das Berechnungssystem (14) künstliche Intelligenz einschließt.

9. System nach einem der Ansprüche 6 bis 8, wobei das Berechnungssystem (14), der integrierte Speicher (11) und die Sicherheitseinrichtungen (13) aus elektronischen Komponenten mit elektromagnetischer Abschirmung bestehen.

10. System nach einem der Ansprüche 6 bis 9, wobei das Berechnungssystem (14), der integrierte Speicher (11) und die Sicherheitseinrichtungen (13) durch einen Sonnenschutzschild vor Strahlung geschützt sind.

11. Satellit (10), der ein System nach einem der Ansprüche 6 bis 10 umfasst und ferner ein Triebwerk (15) umfasst, wobei der Satellit (10) so eingerichtet ist, dass er das Triebwerk (15) in Abhängigkeit von dem Zeitpunkt der nächstgelegenen Desorbitierung innerhalb der von dem Berechnungssystem (14) berechneten Zeit aktiviert.

12. Satellit (10) nach dem vorhergehenden Anspruch, der so eingerichtet ist, dass das Triebwerk (15) den Satelliten (10) aus dem Weltraum (100) in den atmosphärischen Raum (200) bewegen kann.

13. Satellit (10) nach einem der beiden vorhergehenden Ansprüche, der einen Treibstofftank umfasst, der so eingerichtet ist, dass er das Triebwerk (15) mit Treibstoff versorgt.

14. Satellit (10) nach dem vorhergehenden Anspruch, der so eingerichtet ist, dass der Treibstofftank das Triebwerk (15) nur ab dem Zeitpunkt der nächstgelegenen Desorbitierung innerhalb der von dem Berechnungssystem (14) berechneten Zeit mit Treibstoff versorgt.

## Claims

1. A method for destroying a satellite (10) comprising:
- a step of initialising (1000) on Earth (250) or in atmospheric space (200) an onboard memory (11) in the satellite (10) comprising saving, in the onboard memory (11), initial information relating to:
• at least one initial end-of-mission criterion,
and at least one among:
• at least one initial position of at least one secondary body (20),
• at least one initial trajectory of the at least one secondary body (20),
- N cycles (2000) of updating the onboard memory (11), preferably when the satellite (10) is located in outer space (100), each updating cycle comprising the following sub-steps:
• receiving, by a communication device (12) onboard the satellite (10), information relating to at least one of:
∘ at least one end-of-mission criterion n°i,
∘ at least one so-called secondary body (20) data item, the at least one secondary body (20) data item being taken among:
▪ at least one position n°i of the at least one secondary body (20),
▪ at least one trajectory n°i of the at least one secondary body (20), where N and i are integers, N≥1 and 1≤i≤N,
• saving said information in the onboard memory (11),
- a deorbiting phase (5000) comprising activation of an thruster (15) onboard the satellite (10) to move the satellite (10) from outer space (100) into atmospheric space (200), the deorbiting phase (5000) being triggered at a deorbiting time determined by an onboard computing system (14) in the satellite (10), the deorbiting time being a function of:
• on the one hand: the at least one initial position of the at least one secondary body (20) and/or the at least one initial trajectory of the at least one secondary body (20) and/or the at least one secondary body (20) data item available in the updating cycle n°N,
• and, on the other hand, the instant of occurrence of at least one among the following events:
∘ the communication device (12) receiving a deorbiting instruction,
∘ safety means (13) onboard the satellite (10) detecting a satellite (10) malfunction,
∘ observing an end-of-mission criterion.

2. The method according to the preceding claim, wherein the end-of-mission criterion is a mission duration and observing the end-of-mission criterion corresponds to the expiration of the mission duration or wherein the end-of-mission criterion corresponds to at least one action that the satellite (10) must complete and observing the end-of-mission criterion corresponds to the completion of this at least one action by the satellite (10).

3. A method according to any of the preceding claims, wherein the malfunction corresponds to one among a failure of the satellite (10), a disruption of communication between the satellite (10) and a remote base (30), a failure of a payload of the satellite (10).

4. The method according to any of the preceding claims, wherein, during the deorbiting phase (5000), the activation of the thruster (15) moves the satellite (10) from outer space (100) into atmospheric space (200).

5. The method according to any of the preceding claims, comprising, after calculating the deorbiting time, saving the deorbiting time in the onboard memory (11).

6. A system for deorbiting a satellite (10) comprising:
- a communication device (12) configured to receive, when the satellite (10) is on Earth (250) or in atmospheric space (200), data relating to:
• at least one initial end-of-mission criterion,
• at least one initial position of at least one secondary body (20),
• at least one initial trajectory of the at least one secondary body (20), the communication device (12) being configured to receive, when the satellite (10) is in outer space (100), during N updating cycles (2000), data relating to:
• at least one end-of-mission criterion n°i,
• at least one so-called secondary body (20) data item, the at least one secondary body (20) data item being taken among:
∘ at least one position n°i of the at least one secondary body (20),
∘ at least one trajectory n°i of the at least one secondary body (20),
where N and i are integers, N≥1 and 1≤i≤N,
- a computing system (14), configured to determine a deorbiting time based on at least one piece of data from the secondary bodies (20) and the time of occurrence of at least one of the following events:
• the communication device (12) receiving a deorbiting instruction,
• safety means (13) onboard the satellite (10) detecting a malfunction of the satellite (10),
• observing an end-of-mission criterion.

7. The system according to the preceding claim further comprising an onboard memory (11), the onboard memory (11) saving the data received by the communication device (12).

8. The system according to any of claims 6 and 7 wherein the computing system (14) incorporates artificial intelligence.

9. The system according to any one of claims 6 to 8, wherein the computing system (14), the onboard memory (11) and the safety means (13) are composed of electronic components having electromagnetic shielding.

10. The system according to any one of claims 6 to 9, wherein the computing system (14), the onboard memory (11) and the safety means (13) are protected by a solar radiation shield.

11. A satellite (10) comprising a system according to any one of claims 6 to 10 and further comprising a thruster (15), the satellite (10) being configured to activate the thruster (15) based on the closest deorbiting instant over time calculated by the computing system (14).

12. The satellite (10) according to the preceding claim configured such that the thruster (15) can move the satellite (10) from outer space (100) into atmospheric space (200).

13. The satellite (10) according to any of the two preceding claims comprising a fuel tank configured to supply the thruster (15) with fuel.

14. The satellite (10) according to the preceding claim, configured such that the fuel tank supplies the thruster (15) with fuel only from the moment of the nearest deorbiting calculated by the computing system (14).
